# EUROPÄISCHE PATENTANMELDUNG

(11) **EP 4 283 331 A1**
(43) Veröffentlichungstag der Anmeldung: **29.11.2023**
(21) Anmeldenummer: 22175234.8
(22) Anmeldetag: 24.05.2022
(51) Int. Cl.: G01S 7/487, G01S 17/931, G01S 17/42

(54) **OPTISCHE ERFASSUNG UND ABSTANDSMESSUNG**

(71) Anmelder: SICK AG, 79183 Waldkirch (DE)
(72) Erfinder: Marra, Martin, 79280 Au (DE); Michalski, Christoph, 79104 Freiburg (DE); Clemens, Klaus, 79367 Weisweil (DE)

(57) **Zusammenfassung**

Es wird ein entfernungsmessender optoelektronischer Sensor (10) zur Erfassung und Abstandsmessung eines Objekts (16) in einem Überwachungsbereich (14) angegeben, der einen Lichtsender (12) zum Aussenden eines Lichtsignals, einen Lichtempfänger (18) mit mindestens einem Lichtempfangselement (20) zum Erzeugen eines Empfangssignals aus dem von dem Objekt (16) remittierten Lichtsignal sowie eine Steuer- und Auswerteeinheit (22) aufweist, die dafür ausgebildet ist, das Empfangssignal mit einem Schwellensignal zu vergleichen, einen Empfangszeitpunkt des remittierten Lichtsignals, daraus eine Lichtlaufzeit und damit den Abstand des Objekts (16) zu messen. Die Steuer- und Auswertungseinheit (22) ist weiterhin dafür ausgebildet, das Schwellensignal in einer Anfangsphase der Abstandsmessung um einen Sendezeitpunkt des Aussendens des Lichtsignals anzupassen, um während der Anfangsphase eine unempfindlichere Schwelle zu setzen als während der weiteren Abstandsmessung.

## Beschreibung

Die Erfindung betrifft einen entfernungsmessenden optoelektronischen Sensor und ein Verfahren zur optischen Erfassung und Abstandsmessung eines Objekts in einem Überwachungsbereich nach dem Oberbegriff von Anspruch 1 beziehungsweise 15.

Für eine optische Entfernungsbestimmung wird oftmals die Laufzeit eines Lichtsignals gemessen, die über die Lichtgeschwindigkeit der Entfernung entspricht. Nach dem Tastprinzip wird ein Lichtstrahl in den Überwachungsbereich ausgesandt und der von Objekten zurückgeworfene Lichtstrahl wieder empfangen, um dann das Empfangssignal elektronisch auszuwerten. Bei einem pulsbasierten Verfahren (direct ToF, Time of Flight) werden Lichtpulse ausgesandt, und deren Laufzeit bis zum Empfang des zurückkehrenden Lichtpulses wird bestimmt. In einem Pulsmittelungsverfahren als Erweiterung eines Einzelpulsverfahrens, das beispielsweise in der EP 1 972 961 A2 vorgestellt wird, werden Pulse wiederholt ausgesandt und empfangen, um daraus ein Histogramm aufzubauen und das Histogramm anschließend auszuwerten. Als Alternative zu einem Pulsverfahren wird in einem Phasenverfahren (iToF, indirect ToF) ein periodisches Sendemuster aufmoduliert und die empfangsseitige Phase bestimmt.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandsinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. Eine andere Möglichkeit zur Messbereichserweiterung besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen. Ein Mehrlagenscanner wird beispielsweise in EP 3 518 000 A1 beschrieben.

Um aus dem zu erfassenden Empfangslicht ein elektrisches Signal zu erzeugen, genügt die Nachweisempfindlichkeit einfacher Photodioden in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt so lange für weitere Messungen aus. Deshalb ist es üblich, mehrere SPADs zusammenzuschalten und statistisch auszuwerten. Eine Bezeichnung für einen Lichtempfänger mit mehreren zusammengeschalteten SPADs bei Ausgabe eines Summensignals ist SiPM (Silicon Photo Multiplier), wobei Silizium nur der gängige, nicht aber einzige zugrundeliegende Halbleiter ist.

Besondere Schwierigkeiten für eine optische Entfernungsmessung ergeben sich in rauen Umgebungen, beispielsweise bei dichtem Nebel oder Gischt. Dabei kommt es vor allem im Nahbereich zu unerwünschten Streuungen, so dass Licht direkt wieder in den Empfänger einkoppelt. Dadurch wird dann womöglich ein falscher Abstandswert zu der Störung, statt zu einem festen Objekt gemessen. Ein herkömmlicher Ausweg besteht in einer gesonderten digitalen Auswertung im Nahbereich. Bekannt ist auch, die Peaks im Empfangssignal zu lokalisieren und zu bewerten, beispielsweise nur den hintersten Peak einem Objekt zuzuordnen oder aus der Pulsform Schlüsse auf einen Störpeak oder Objektpeak zu ziehen. Solche Heuristiken sind beispielsweise aus EP 2 045 625 A1 oder EP 2 182 378 A1 bekannt.

Die DE 20 2013 101 039 U1 aktiviert ihre Lawinenphotodiodenelemente nur in einem Zeitfenster nach Aussenden von Sendelicht, das einem Entfernungsbereich um eine erwartete Objektentfernung entspricht. Das blendet den Nahbereich bei einem ferner erwarteten Objekt ganz aus, hilft aber nicht bei der Unterscheidung von Störungen und einem nahe erwarteten Objekt. In der EP 3 270 182 A1 wird die Empfindlichkeit des Lichtempfängers dynamisch an einen erwarteten Abstand des Objekts angepasst.

Die EP 3 770 633 B1 befasst sich mit einem optoelektronischen Sensor zur Abstandsbestimmung mit einem Lichtlaufzeitverfahren, der zwei Abtasteinheiten mit einer niedrigen beziehungsweise einer hohen Schwelle aufweist. Die hohe Schwelle dient als eine Art Filter, ob die Abtastungen mit der niedrigen Schwelle weiter ausgewertet werden. In der EP 3 557 286 B1 ist in einem optoelektronischen Sensor zur Abstandsmessung, der das Empfangssignal mit einer analogen Schwelle bewertet, eine Schwellanpassungen mittels Dioden vorgesehen, die den Rauschpegel näherungsweise als Quadratwurzel eines Gleichstromanteils des Empfangssignals bestimmen. Die noch unveröffentlichte europäische Patentanmeldung mit dem Aktenzeichen 22164402.4 misst zusätzlich zu einer Lichtlaufzeit den Pegel des Empfangssignals und passt damit eine Schwelle zur Bestimmung eines Empfangszeitpunkts an. Alle diese Schwellenanpassungen erfolgen jedoch nicht, um der Problematik mit Störungen im Nahbereich zu begegnen.

Es ist daher Aufgabe der Erfindung, eine Lichtlaufzeitmessung weiter zu verbessern.

Diese Aufgabe wird durch einen entfernungsmessenden optoelektronischen Sensor und ein Verfahren zur optischen Erfassung und Abstandsmessung eines Objekts in einem Überwachungsbereich nach Anspruch 1 beziehungsweise 15 gelöst. Der Sensor weist einen Lichtsender, einen Lichtempfänger mit mindestens einem Lichtempfangselement sowie eine Steuer- und Auswertungseinheit auf, um ein Lichtsignal auszusenden, wieder zu empfangen und durch Auswertung des Empfangssignals die Lichtlaufzeit und damit den Abstand zu einem Objekt zu messen. Für die Lichtlaufzeitmessung wird das Empfangssignal mit einem Schwellensignal verglichen und so mit einer Schwelle bewertet. Je nach Ausführungsform wird der Empfangszeitpunkt unmittelbar oder mittelbar über das Schwellensignal gefunden. Unmittelbar heißt beispielsweise, dass ein Empfangspuls durch Schwellüberschreitung erkannt und so zeitlich lokalisiert wird. Die Schwelle ist dann eine Detektionsschwelle. Mittelbar dient die Schwelle einer Digitalisierung oder Binarisierung des Empfangssignals, wobei dann eine weitere Auswertung im Digitalen den Empfangszeitpunkt auffindet. In diesem Fall ist die Schwelle eine Komparatorschwelle.

Das ausgesandte Lichtsignal ist vorzugsweise ein Puls. Das mindestens eine Lichtempfangselement, vorzugsweise eine Vielzahl von Lichtempfangselementen oder Zellen, kann prinzipiell eine APD oder ein sonstiger Lichtdetektor sein. Bevorzugt handelt es sich um ein im Geigermodus betriebenes Lichtempfangselement, also einen SPAD-basierten Lichtempfänger. Insbesondere werden die Photoströme mehrerer solcher Lichtempfangselemente schon früh in der Verarbeitungskette miteinander kombiniert. Ein Beispiel ist eine Umsetzung als Siliziumphotomultiplier (SiPM), der ein quasi-analoges Bauteil darstellt.

Die Erfindung geht von dem Grundgedanken aus, in einem Nahbereich eine unempfindlichere Schwelle zu verwenden. Der räumliche Nahbereich lässt sich über die Lichtlaufzeit einer zeitlichen Anfangsphase der Abstandsmessung zuordnen. Diese Anfangsphase beginnt im Prinzip mit dem Aussenden des Lichtsignals bei einer Lichtlaufzeit Null beziehungsweise einem Objektabstand Null. Es kann dabei aber noch einen Zeitversatz geben, sei es negativ, um zum Zeitpunkt des Aussendens des Lichtsignals bereits einen eingeschwungenen Zustand des angepassten Schwellenzustands zu erreichen, oder positiv, um dem Nahbereich einen gewissen Mindestabstand vom Sensor zu geben. Vorzugsweise gibt es keinen Zeitversatz oder nur einen negativen Zeitversatz, damit der vollständige Nahbereich ab Abstand Null umfasst ist. Die erfindungsgemäß während der Anfangsphase unempfindlichere Schwelle wird üblicherweise höher gesetzt als während der übrigen Abstandsmessung. Da es Ausführungsformen mit invertierten Signalen geben kann (active-low) und die Schwelle dann herabgesetzt werden muss, um sie unempfindlicher zu machen, wird allgemeiner davon gesprochen, das Schwellensignal anzupassen.

Die Erfindung hat den Vorteil, dass mittels Schwellenanpassung im Nahbereich Fehlmessungen auf Störungen wie Nebel oder Gischt vermieden oder wenigstens reduziert werden. Damit geht ein gewisser Verlust an Sensitivität für Objekte schwacher Remission im Nahbereich einher. Die Störunterdrückung und die Sensitivität können durch das Ausmaß der Schwellenanpassung gegeneinander abgewogen werden. Je nach Ausführungsform ist dafür lediglich eine elektronische Ansteuerung erforderlich, um die Schwellenanpassung anders auszulegen, oder in einer analogelektronischen Auslegung kann eine einfache Umdimensionierung der analogen Bauteile vorgenommen werden. Nebel und Gischt sind nur Beispiele von Störeffekten im Nahbereich, die erfindungsgemäß ausgeblendet werden können. Ebenso können andere Effekte wie optisches Übersprechen beispielsweise durch Frontscheibenreflexe insbesondere wegen Schmutz- oder Staubpartikeln, Beschlag oder Flüssigkeit unterdrückt werden.

Die Steuer- und Auswertungseinheit weist bevorzugt eine Digitalisierungseinheit oder Binarisierungseinheit auf, wobei das Schwellensignal eine Digitalisierungsschwelle oder Binarisierungsschwelle setzt. In dieser Ausführungsform wird die in der Anfangsphase angepasste Schwelle zum Digitalisieren des Empfangssignals verwendet. Dabei gibt es vorzugsweise nur eine einzige Schwelle, mit der das Empfangssignal binarisiert wird. Die Schwelle wird dann auch als Komparatorschwelle bezeichnet. Sie differenziert zwischen Hintergrund und Nutzlicht, erkennt insbesondere einen Empfangspuls durch ein überschwelliges Empfangssignal. Eine unempfindlichere Schwelle erkennt demnach nur besonders ausgeprägtes Nutzlicht, das sich auch gegenüber dem erhöhten Hintergrund im Nahbereich unter Störbedingungen wie Nebel oder Gischt durchsetzt. Alternativ werden mehrere Schwellen für zusätzliche digitale Zustände verwendet. Auch hier führt eine unempfindlichere Schwelle dazu, dass höhere digitale Werte nur für ausgeprägtes Nutzlicht angenommen werden. Wie schon erwähnt, kann das Schwellensignal alternativ statt mittelbar wie in dieser Ausführungsform auch unmittelbar zum Bestimmen des Empfangszeitpunkt genutzt werden. Die Schwellenüberschreitung lokalisiert dann direkt, gegebenenfalls noch mit Korrekturen, einen Empfangspuls in der Zeit.

Die Steuer- und Auswertungseinheit ist bevorzugt dafür ausgebildet, in einer Vielzahl von Einzelmessungen jeweils ein Lichtsignal auszusenden und wieder zu empfangen, aus den jeweiligen Empfangssignalen der Einzelmessungen durch den Vergleich des Empfangssignals mit dem Schwellensignal ein Histogramm aufzubauen und das Histogramm für die Bestimmung des Empfangszeitpunkts auszuwerten. In dieser Ausführungsform wird mit einem Pulsmittelungsverfahren gemessen, das beispielsweise in der einleitend genannten EP 1 972 961 A2 beschrieben ist. Die Schwelle ist dabei vorzugsweise eine Komparatorschwelle oder Binarisierungsschwelle. Das Histogramm sammelt als Ereignisse in Zeitbins die Anzahl Einzelmessungen, in denen in den jeweiligen Zeitbins die Binarisierungsschwelle überschritten ist. Dabei ergibt sich eine Art Nulllinie bei einem Mittelwert, nämlich einer Anzahl Ereignisse, wie oft ohne Empfang des remittierten Lichtsignals die Schwelle überschritten wird. Die unempfindlichere Schwelle in der Anfangsphase sorgt für weniger Ereignisse und setzt diesen Mittelwert herab. Alternativ zu einem Pulsmittelungsverfahren bleibt ein Einzelpulsverfahren denkbar.

Die Steuer- und Auswertungseinheit ist bevorzugt dafür ausgebildet, ein analoges Schwellensignal zu erzeugen und analog mit dem Empfangssignal zu vergleichen. Der Schwellenvergleich findet demnach noch in der analogen Verarbeitungsstufe des Empfangssignals statt. Dafür sind sehr einfache Schaltungen möglich. Im Stand der Technik wird, wie einleitend angesprochen, eine Differenzierung zwischen Störungen und Objekt im Nahbereich durch Algorithmen nach einer Digitalisierung vorgenommen, und dabei werden die digitalisierten Empfangssignale meist mit komplexen Algorithmen bearbeitet. Das ist folglich ein ganz anderer Ansatz als eine analoge Schwelle.

Die Steuer- und Auswertungseinheit weist bevorzugt einen Komparator mit einem ersten Eingang und einem zweiten Eingang auf, wobei das Empfangssignal an dem ersten Eingang und das Schwellensignal an dem zweiten Eingang angelegt ist. Der Komparator ist ein sehr einfaches analoges Bauteil, um die Schwellenbewertung vorzunehmen. Bevorzugt wird mit dem Komparator das Empfangssignal binarisiert. Das Schwellensignal setzt hierfür die Komparatorschwelle oder Binarisierungsschwelle.

Die Steuer- und Auswertungseinheit ist bevorzugt dafür ausgebildet, einen Anpassungspuls zu erzeugen, der das Schwellensignal in der Anfangsphase verändert. In dieser Ausführungsform wird das Schwellensignal pulsartig angepasst. Der für die Anfangsphase benötigte Verlauf des Schwellensignals wird durch den Anpassungspuls vorgegeben. Außerhalb der Anfangsphase ist das Schwellensignal vorzugsweise konstant.

Die Steuer- und Auswertungseinheit ist bevorzugt dafür ausgebildet, den Anpassungspuls mit einer Pulscharakteristik in Beginn, Ende, Dauer, Anstiegsverhalten und/oder Abklingverhalten entsprechend einer vorgegebenen Anpassung des Schwellensignals zu erzeugen. Der Anpassungspuls und damit das Verhalten der Schwelle in der Anfangsphase können durch die Pulscharakteristik wie gewünscht parametriert werden.

Das gilt wahlweise in zeitlicher Hinsicht wie in Bezug auf das Ausmaß der Schwellenanpassung.

Die Steuer- und Auswertungseinheit ist bevorzugt dafür ausgebildet, einen Triggerpuls zu erzeugen, der in einem bekannten Zeitversatz zum Aussenden des Lichtsignals steht, insbesondere das Aussenden auslöst. Der Triggerpuls ist ein elektrisches Signal, das direkt oder mittelbar in dem Lichtsender mit bekanntem Zeitbezug in das ausgesandte Lichtsignal umgesetzt wird. Über den Triggerpuls ist der Sensor synchronisierbar, somit die zeitliche Lage der Anfangsphase bekannt. Vorzugsweise gibt es einen Zeitversatz zwischen elektrischem Triggerpuls und optischem Lichtsignal, der dafür genutzt werden kann, dass das Schwellensignal schon mit Einsetzen der Anfangsphase in einer gewünschten Weise eingeschwungen ist.

Die Steuer- und Auswertungseinheit ist bevorzugt dafür ausgebildet, in einer Anpassungspulserzeugungseinheit aus dem Triggerpuls den Anpassungspuls zu erzeugen. Dabei ist der Triggerpuls neben der soeben erläuterten Funktion als direkter oder mittelbarer Auslöser des optischen Lichtsignals zudem für die Erzeugung des Anpassungspulses zuständig. Über den Triggerpuls ist somit die Synchronisierung sichergestellt, die Anfangsphase mit angepasstem Schwellensignal also an das optische Lichtsignal gebunden, dies gegebenenfalls mit einem gewünschten bekannten Zeitversatz. Eine Anpassungspulserzeugungseinheit kann insbesondere als analoge Anpassungsschaltung ausgebildet sein, die den eingehenden Triggerpuls in einen Anpassungspuls wandelt. Die Dimensionierung der Schaltelemente der Anpassungsschaltung gibt dabei die Pulscharakteristik des Anpassungspulses vor.

Die Anpassungspulserzeugungseinheit weist bevorzugt einen Kondensator auf, der durch den Triggerpuls aufgeladen wird und sich unter Erzeugen des Anpassungspulses entlädt. Der Kondensator ist ein sehr einfaches elektrisches Bauteil, das aber bereits einen wesentlichen Teil der gewünschten Umsetzung des Triggerpulses in den Anpassungspuls leistet. Die Kapazität des Kondensators nimmt dabei Einfluss auf die Pulscharakteristik.

Die Anpassungspulserzeugungseinheit weist bevorzugt einen ersten Widerstand und eine Diode, insbesondere eine Schottky-Diode, zum Aufladen des Kondensators auf. Der erste Widerstand und der dynamische Widerstand der Diode bestimmen gemeinsam mit der Kapazität des Kondensators die Aufladezeitkonstante.

Die Anpassungspulserzeugungseinheit weist bevorzugt eine Teilerschaltung mit einem zweiten Widerstand und einem dritten Widerstand zum Entladen des Kondensators auf. Über die Teilerschaltung beziehungsweise das Verhältnis von zweitem Widerstand zu drittem Widerstand lässt sich die Amplitude des Anpassungspulses beeinflussen. Zweiter Widerstand und dritter Widerstand bestimmen mit der Kapazität des Kondensators die Entladezeitkonstante.

Die Anpassungspulserzeugungseinheit ist bevorzugt dafür ausgebildet, einen negativ gerichteten Anpassungspuls zu erzeugen. Üblicherweise liegt das Schwellensignal im Ruhezustand bei Null, unempfindlicher ist daher eine höhere Schwelle, somit wird für die entsprechende Anpassung ein positiver Anpassungspuls benötigt. In einer invertierten Ausführungsform (active low) ist jedoch für eine unempfindlichere Schwelle ein negativer Anfangspuls erforderlich. Auch das ist in einer einfachen analogen Anpassungsschaltung möglich. Beispielsweise wird hier ein Kondensator im Ruhezustand aufgeladen und für die Anfangsphase durch einen negativen Triggerpuls entladen, wodurch dann ein negativer Anpassungpuls abgegriffen werden kann.

Die Steuer- und Auswertungseinheit ist bevorzugt dafür ausgebildet, die Anpassung des Schwellensignals in der Anfangsphase wahlweise an- oder abzuschalten. Es gibt dadurch in dem Sensor eine Art wählbaren Nebel- oder Störmodus für die erfindungsgemäße Schwellenanpassung im Nahbereich. Dieser Modus kann auch abgeschaltet werden, der Sensor wird dann ohne die Schwellenanpassung in der Anfangsphase betrieben, beispielsweise für einen Indoor-Betrieb oder auch wetterabhängig, wenn keine Störungen erwartet werden.

Der Sensor ist bevorzugt als Laserscanner ausgebildet, insbesondere als Mehrlagenscanner, und weist eine bewegliche Ablenkeinheit auf, mit deren Hilfe die Lichtsignale periodisch durch den Überwachungsbereich geführt werden. Die Ablenkeinheit ist in beliebiger Weise beispielsweise als Drehspiegel, jedoch vorzugsweise in Form einer drehbaren Abtasteinheit ausgebildet, die praktisch einen beweglichen Messkopf bildet, in dem der Lichtsender und/oder der Lichtempfänger und bevorzugt auch zumindest Teile der Steuer- und Auswertungseinheit untergebracht sind. Ein Mehrebenen- oder Mehrlagenscanner tastet mit der Bewegung der beweglichen Ablenkeinheit den Überwachungsbereich in mehreren Lagen oder näherungsweise Ebenen ab.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine vereinfachte Blockdarstellung eines optoelektronischen Sensors zur Lichtlaufzeitmessung;
- Fig. 2: eine Schnittdarstellung eines als Laserscanner ausgebildeten optoelektronischen Sensors;
- Fig. 3: ein beispielhaftes Empfangssignal mit moderat ausgebildetem Störpeak im Nahbereich, der durch eine angepasste Schwelle ausgeblendet wird;
- Fig. 4: ein beispielhaftes Empfangssignal ähnlich Figur 3 nun mit ausgeprägtem Störpeak, der auch die angepasste Schwelle überschreitet;
- Fig. 5: ein beispielhafter Verlauf des Mittelwerts eines mit einer angepassten Schwelle bewerteten Empfangssignals;
- Fig. 6: ein Blockschaltbild zur Erläuterung einer Schwellenanpassung im Nahbereich;
- Fig. 7: eine schematische Darstellung zweier aufeinanderfolgender Sendepulse mit dazu synchronen Anpassungspulsen für eine Schwelle;
- Fig. 8: eine beispielhafte Schaltung zum Erzeugen eines positiven Anpassungspulses aus einem Triggerpuls; und
- Fig. 9: eine beispielhafte Schaltung zum Erzeugen eines negativen Anpassungspulses aus einem Triggerpuls.

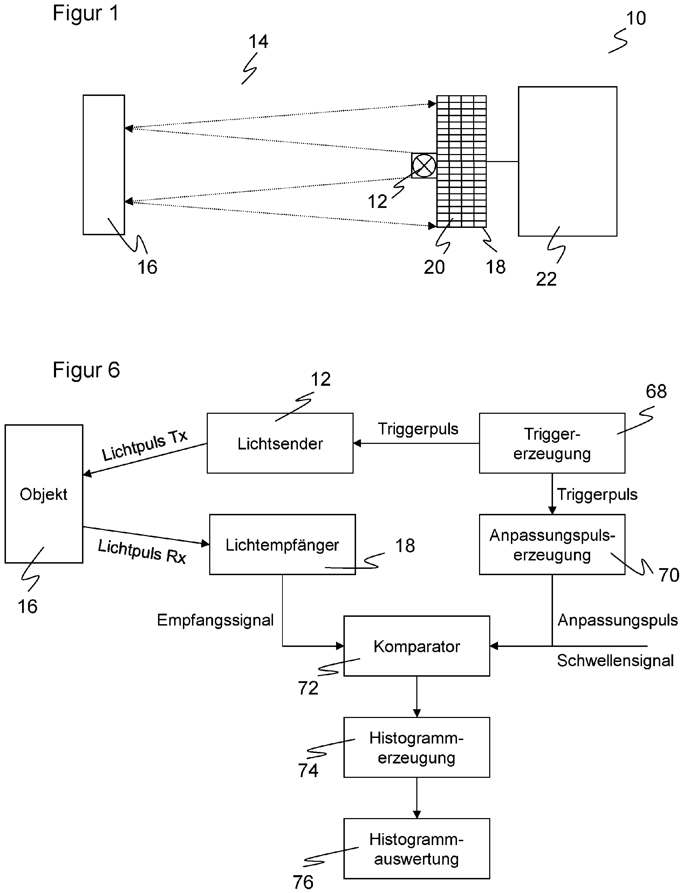

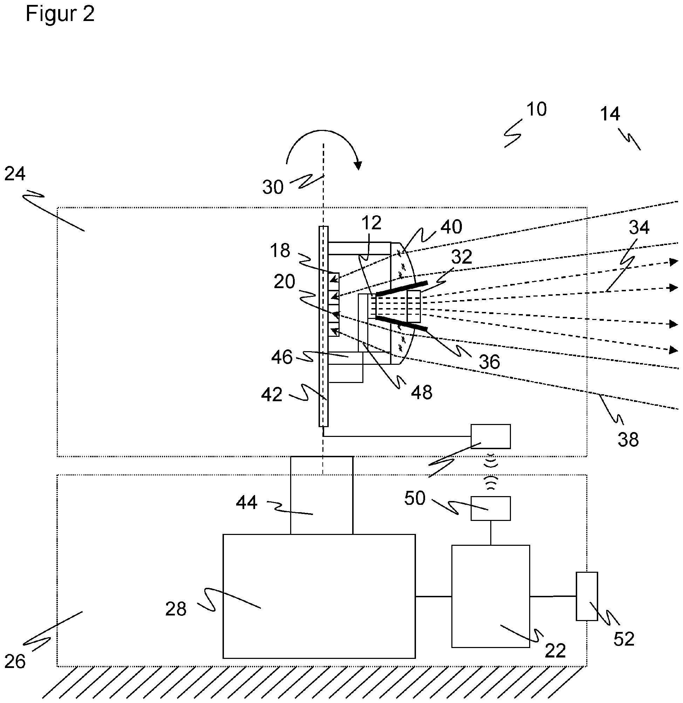

Figur 1 zeigt eine sehr vereinfachte schematische Blockdarstellung eines optoelektronischen Sensors 10 in einer Ausführungsform als einstrahliger Lichttaster. Die Ausführungsform als Lichttaster ist rein beispielhaft. Eine weitere Ausführungsform als Laserscanner wird später noch unter Bezugnahme auf die Figur 2 erläutert. Als weitere Alternative können mehrere Sensoren 10 miteinander verbunden werden, um ein tastendes Lichtgitter mit mehreren, meist parallelen Strahlen zu bilden, welches in jedem Strahl Entfernungen misst oder überwacht. Diese Aufzählung optoelektronischer Sensoren, in denen die Erfindung eingesetzt werden kann, ist nicht abschließend. Auch mobile Systeme sind denkbar, bei denen der Sensor 10 beweglich montiert ist.

Ein Lichtsender 12, beispielsweise eine LED oder eine Laserlichtquelle, sendet ein Lichtsignal, vorzugsweise einen Lichtpuls, in einen Überwachungsbereich 14 aus. Trifft es dort auf ein Objekt 16, so wird ein Teil des Lichtsignals remittiert oder reflektiert und kehrt zu einem Lichtempfänger 18 zurück. Dieser Lichtempfänger 18 weist in dieser Ausführungsform eine Vielzahl von Lichtempfangselementen auf, die als Lawinenphotodiodenelemente 20 im Geigermodus oder SPADs ausgebildet sind. Bevorzugt handelt es sich um einen SiPM (Silicon Photomultiplier). Die Lawinenphotodiodenelemente 20 sind beispielsweise zu einer Matrix, einer Linie oder auch in einem anderen Muster oder irregulär angeordnet. In anderen Ausführungsformen weist der Lichtempfänger 18 keine SPADs auf, sondern andere Lichtempfangselemente, oder es handelt sich um einen Einzelempfänger mit nur einem Lichtempfangselement.

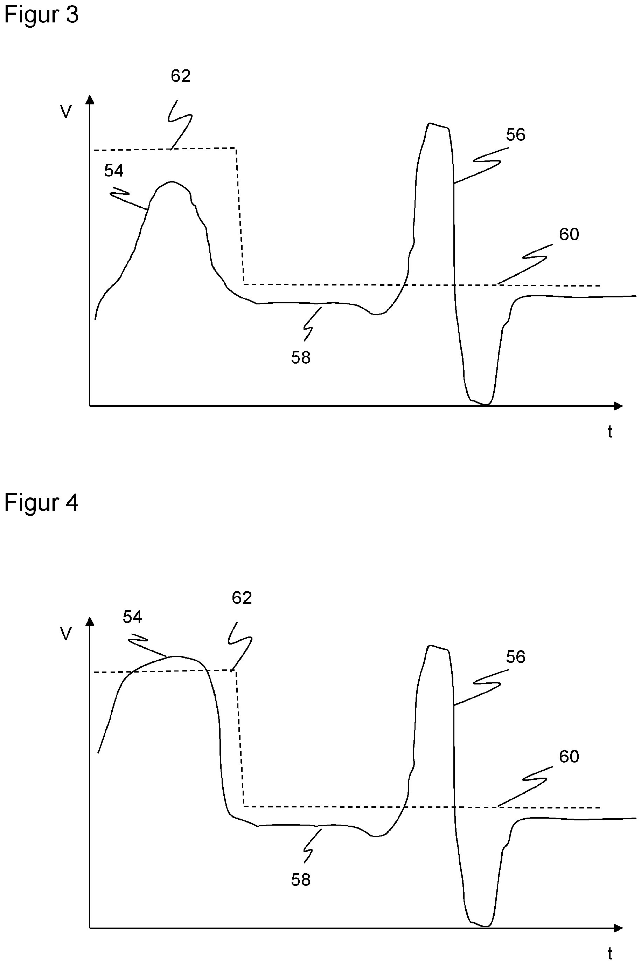

Die Empfangssignale der Lawinenphotodiodenelemente 20 werden von einer Steuer- und Auswertungseinheit 22 ausgelesen und dort ausgewertet. Dazu können die Empfangssignale einzeln oder gruppenweise ausgewertet werden, um eine Ortsauflösung zu erhalten, oder zu einem Summensignal zusammengefasst werden. Im Folgenden wird häufig vereinfachend nur ein Empfangssignal stellvertretend betrachtet. Um den Abstand des Objekts 16 zu messen, bestimmt die Steuer- und Auswertungseinheit 22 eine Lichtlaufzeit vom Aussenden eines Lichtsignals bis zu dessen Empfang und rechnet dies über die Lichtgeschwindigkeit in einen Abstand um. Im Zuge der Bestimmung der Lichtlaufzeit wird das Empfangssignal mit einer Schwelle bewertet, und diese Schwelle wird für die Erfassung eines Objekts 16 im Nahbereich unter Störeinfluss beispielsweise von Nebel oder Gischt angepasst. Die Schwellenanpassung wird später unter Bezugnahme auf die Figuren 3 bis 9 näher erläutert. Die Steuer- und Auswertungseinheit 22 kann außerdem auf Lichtsender 12 und/oder Lichtempfänger 18 einwirken, etwa um das Lichtsignal zu formen und auszulösen oder dessen Eigenschaften festzulegen, oder um Eigenschaften des Lichtempfängers 18 einzustellen.

Die Auftrennung in Lichtempfänger 18 und Steuer- und Auswertungseinheit 22 in Figur 1 ist so auch in der Praxis denkbar, dient aber in erster Linie der Erläuterung. Alternativ werden diese Elemente zumindest teilweise auf einem gemeinsamen Chip integriert, dessen Fläche sich lichtempfindliche Bereiche der Lawinenphotodiodenelemente 20 und einzelnen oder Gruppen von Lawinenphotodiodenelementen 20 zugeordnete Schaltkreise zu deren Auswertung und Ansteuerung teilen. Auch die optische Anordnung mit einem Lichtsender 12, der einen kleinen Anteil des Lichtempfängers 18 verdeckt, ist rein beispielhaft. Alternativ sind andere bekannte optische Lösungen einsetzbar, wie Autokollimation etwa mit einem Strahlteiler und einer gemeinsamen Optik, oder Pupillenteilung, wo zwei getrennte Optiken vorgesehen sind und Lichtsender und Lichtempfänger nebeneinander angeordnet werden.

Figur 2 zeigt eine schematische Schnittdarstellung durch einen optoelektronischen Sensor 10 in einer Ausführungsform als Laserscanner. Dabei sind gleiche oder einander entsprechende Merkmale mit den schon zu Figur 1 eingeführten Bezugszeichen versehen, und nur abweichende Eigenschaften werden noch beschrieben. Der Sensor 10 umfasst in grober Aufteilung eine bewegliche Abtasteinheit 24 und eine Sockeleinheit 26. Die Abtasteinheit 24 ist der optische Messkopf, während in der Sockeleinheit 26 weitere Elemente wie eine Versorgung, Auswertungselektronik, Anschlüsse und dergleichen untergebracht sind. Im Betrieb wird mit Hilfe eines Antriebs 28 der Sockeleinheit 26 die Abtasteinheit 24 in eine Drehbewegung um eine Drehachse 30 versetzt, um so den Überwachungsbereich 14 periodisch abzutasten.

In der Abtasteinheit 24 sind Lichtsender 12 und Lichtempfänger 18 untergebracht. Der Lichtsender 12 weist hier beispielsweise eine LED oder einen Laser in Form eines Kantenemitters oder VCSELs auf und sendet mit Hilfe einer dargestellten Sendeoptik 32 mehrere Sendelichtstrahlen 34 mit gegenseitigem Winkelversatz in den Überwachungsbereich 14 aus. Die Erzeugung der mehreren Sendelichtstrahlen 34 ist beispielsweise über eine Vielzahl von Lichtquellen und/oder durch optische Elemente wie Strahlteiler, Lichtleiter oder diffraktive Elemente möglich. Zur Vermeidung von Streulicht innerhalb des Sensors 10 kann der interne Lichtweg der Sendelichtstrahlen 34 von einem lichtundurchlässigen Tubus 36 abgeschirmt werden.

Treffen die Sendelichtstrahlen 34 in dem Überwachungsbereich 14 auf ein Objekt, so kehren entsprechende remittierte Lichtstrahlen 38 zu dem Sensor 10 zurück. Die remittierten Lichtstrahlen 38 werden von einer Empfangsoptik 40 auf den Lichtempfänger 18 geführt. Der Lichtempfänger 18 weist mehrere Gruppen von SPADs (Single-Photon Avalanche Diode) beziehungsweise mehrere SiPMs (Silicon Photomultiplier) auf, um die mehreren remittierten Lichtstrahlen 38 zu erfassen. Dabei ist vorzugsweise der Empfangspfad mit der Gestaltung der Empfangsoptik 40 sowie der Anordnung und Ausrichtung von Lichtempfänger 18 und Empfangsoptik 40 so ausgelegt, dass jeweils ein remittierter Lichtstrahl 38 auf eine bestimmte Gruppe von SPADs beziehungsweise ein SiPM fällt. Wechselwirkungen sind aber in der Regel insbesondere nicht für alle Abstände von Objekten zu vermeiden. Das kann ein Grund dafür sein, die remittierten Lichtstrahlen 38 vorzugsweise getrennt in einem Multiplexbetrieb zu empfangen.

Der Lichtempfänger 18 ist in dieser Ausführungsform auf einer Leiterkarte 42 angeordnet, die auf der Drehachse 30 liegt und mit der Welle 44 des Antriebs 28 verbunden ist. Die Empfangsoptik 40 stützt sich durch Beinchen 46 auf der Leiterkarte 42 ab und hält eine weitere Leiterkarte 48 des Lichtsenders 12. Die beiden Leiterkarten 42, 48 sind untereinander verbunden und können auch als gemeinsame Flexprint-Leiterkarte ausgebildet sein.

Der in Figur 2 gezeigte optische Aufbau mit zwei übereinander geschichteten Leiterkarten 42, 48 oder Leiterkartenbereichen und einer zentral innerhalb der Empfangsoptik 40 angeordneten gemeinsamen Sendeoptik 32 ist rein beispielhaft zu verstehen. So wäre alternativ jede andere an sich beispielsweise von eindimensionalen optoelektronischen Sensoren oder Laserscannern bekannte Anordnung wie etwa eine biaxiale Anordnung beziehungsweise Doppelaugenanordnung oder die Verwendung eines Umlenk- oder Strahlteilerspiegels möglich. Weiterhin ist denkbar, Lichtsender 12 und Lichtempfänger 18 auf einer gemeinsamen Leiterkarte zu montieren, bei gegenüber Figur 2 veränderter Anordnung auch auf einer gemeinsamen Leiterkarte, die in nur einer Ebene liegt.

Eine berührungslose Versorgungs- und Datenschnittstelle 50 verbindet die bewegliche Abtasteinheit 24 mit der ruhenden Sockeleinheit 26. Dort befindet sich die Steuer- und Auswertungseinheit 22, die zumindest teilweise auch auf der Leiterkarte 42 oder an anderem Ort in der Abtasteinheit 24 untergebracht sein kann. Zusätzlich zu Steuer- und Auswertungsfunktionen analog zu denjenigen, die zu der Ausführungsform gemäß Figur 1 schon beschrieben wurden, wird davon der Antrieb 28 gesteuert und das Signal einer nicht gezeigten, von Laserscannern allgemein bekannten Winkelmesseinheit erfasst, die die jeweilige Winkelstellung der Abtasteinheit 24 bestimmt.

Aus den mittels Lichtlaufzeitverfahren bestimmten Abständen zu einem jeweiligen angetasteten Objekt und der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 38 und dessen Erfassungsort auf dem Lichtempfänger 18 ebenfalls bekannt, so dass insgesamt ein dreidimensionaler Raumbereich abgetastet wird. Damit sind die Objektpositionen beziehungsweise Objektkonturen bekannt und können über eine Sensorschnittstelle 52 ausgegeben werden. Die Sensorschnittstelle 52 oder ein weiterer, nicht gezeigter Anschluss dienen umgekehrt als Parametrierschnittstelle.

Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 52 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der dargestellte Sensor 10 ist ein Laserscanner mit rotierendem Messkopf, nämlich der Abtasteinheit 24. Alternativ ist auch eine periodische Ablenkung mittels Drehspiegel denkbar. Bei mehreren Sendelichtstrahlen 34 hat das aber den Nachteil, dass es von der jeweiligen Drehstellung abhängt, wie die mehreren Sendelichtstrahlen 34 in den Überwachungsbereich 14 fallen, denn deren Anordnung rotiert durch den Drehspiegel, wie bekannte geometrische Überlegungen ergeben. Eine weitere alternative Ausführungsform schwenkt die Abtasteinheit 24 hin und her, entweder anstelle der Drehbewegung oder zusätzlich um eine zweite Achse senkrecht zur Drehbewegung, um auch in Elevation eine Abtastbewegung zu erzeugen. Auch eine Ausgestaltung als Solid-State-Lidar ist möglich.

Figur 3 zeigt mit durchgezogener Linie ein beispielhaftes Empfangssignal des Lichtempfängers 18 in Form eines zeitabhängigen Spannungssignals. Die Zeitachse überträgt sich über die Lichtgeschwindigkeit in einen Objektabstand, und die Spannung ist ein mögliches Maß für den Pegel des Empfangssignals. In einer Anfangsphase bei kleinem t entsprechend einem Nahbereich ergibt sich ein Störpeak 54, der beispielsweise durch Streuung oder Reflexion an Nebel- oder Gischtpartikeln erzeugt ist. Zu späterer Zeit t beziehungsweise in größerem Abstand wird durch Remission von dem Objekt 16 ein Objektpeak 56 erzeugt. Dazwischen bewegt sich das Empfangssignal auf einem Ruhepegel 58, der durch Fremdlicht und Dunkelrauschen entsteht. Der Nachschwinger nach unten hinter dem Objektpeak 56 ist den Totzeiten von SPADs geschuldet und hier nicht weiter zu beachten.

Bei einer Bewertung dieses Empfangssignals mit einer konstanten Schwelle 60 würde der Störpeak 54 fälschlich als Objekt erkannt und somit ein viel zu kleiner Objektabstand gemessen. Durch eine angepasste, unempfindlichere Schwelle 62 im Nahbereich wird der Störpeak ausgeblendet und der eigentliche Objektpeak 56 der Abstandsmessung zugrunde gelegt.

Figur 4 zeigt ähnlich Figur 3 ein weiteres beispielhaftes Empfangssignal. Hier ist der Störpeak 54 noch stärker ausgeprägt, beispielsweise in dichterem Nebel, und überschreitet daher auch die angepasste Schwelle 62. Eine Schwellenanpassung im Nahbereich kann somit nicht alle Situationen auflösen. Diese Problematik tritt spätestens dann auf, wenn der Störpeak 54 so stark wird wie ein Objektpeak 56 von einem hellen oder gar reflektierenden Ziel beziehungsweise das Empfangssignal im Nahbereich sogar in Sättigung geht. Vielmehr lässt sich durch Wahl der angepassten Schwelle 62 eine Abwägung zwischen Störausblendung und Objektsensitivität treffen. Ergänzend können die verschiedenen Peaks 54, 56 durch weitere Maßnahmen unterschieden werden, etwa anhand ihrer Abfolge auf der Zeitachse oder ihrer Pulsform. Jedenfalls ermöglicht es eine angepasste Schwelle 62 in zahlreichen Fällen, mit Störungen im Nahbereich umzugehen.

Die Schwelle 60, 62 dient im Beispiel der Figuren 3 und 4 direkt der Lokalisierung von Peaks 54, 56, sie kann als Detektionsschwelle aufgefasst werden. In einer anderen bevorzugten Ausführungsform wird das Empfangssignal vor der weiteren Auswertung digitalisiert und insbesondere binarisiert. Die Schwelle ist dann eine Komparatorschwelle zur Digitalisierung oder Binarisierung. Insbesondere liegt einer Abstandsmessung jeweils eine Vielzahl von Einzelmessungen zugrunde, in denen jeweils ein Lichtpuls ausgesandt, wieder empfangen und aus dem mittels der Komparatorschwelle bewerteten Empfangssignal ein Histogramm aufgebaut wird. Im Falle einer Binarisierung wird in den Bins des Histogramms gezählt, wie oft in dem durch das jeweilige Bin repräsentierten Zeitabschnitt das Empfangssignal überschwellig ist. Über die Einzelmessungen hinweg spiegeln sich damit die Peaks 54, 56 in den Bins wider, so dass ein Empfangszeitpunkt durch Auswertung des Histogramms aufgefunden werden kann. Ein solches Pulsmittelungsverfahren wird beispielsweise in der einleitend genannten EP 1 972 961 A2 beschrieben, auf die ergänzend verwiesen wird. Unter Einsatz mehrerer Komparatorschwellen können die binären Zustände weiter differenziert werden, das wird hier insbesondere unter Digitalisieren verstanden.

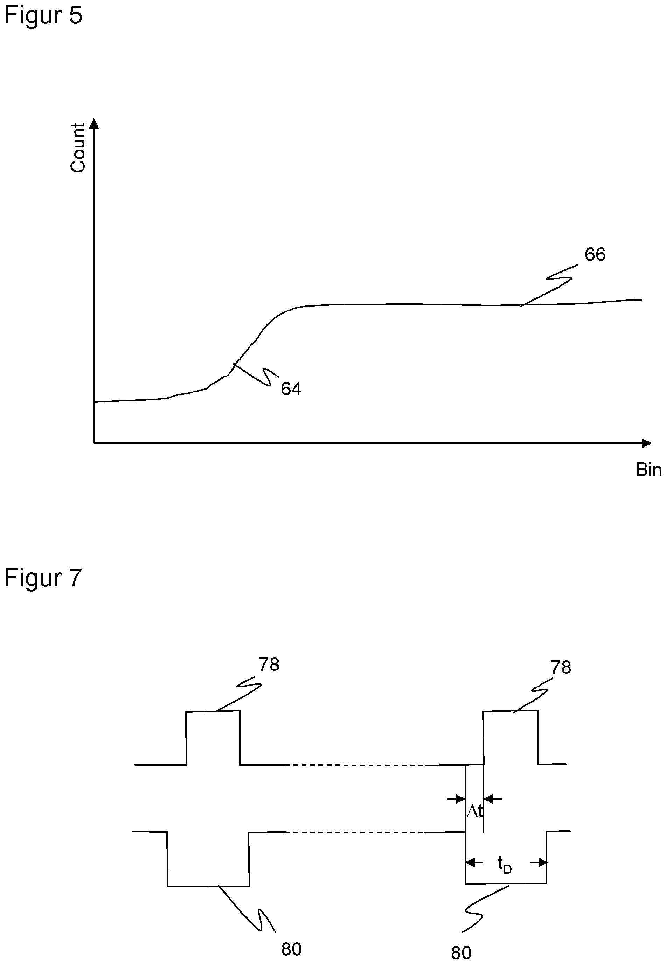

Figur 5 illustriert die Auswirkung einer Anpassung der Komparatorschwelle in einer Anfangsphase beziehungsweise im Nahbereich. Aufgetragen ist hier der Mittelwert der Counts in den Bins des Histogramms, vereinfachend als durchgehende Linie statt als diskretes Säulendiagramm gezeichnet. Das ist also die Anzahl ohne Störungen oder Objekte zu erwartender überschwelliger Ereignisse. Wird die Komparatorschwelle in der Anfangsphase angehoben, so ist ein stärkeres Empfangssignal erforderlich, um ein zu zählendes Ereignis zu erzeugen. Deshalb ist der anfängliche Mittelwert 64 in der Anfangsphase geringer, ehe sich nach der Anfangsphase eine Mittenlage 66 einstellt. Im Ergebnis wird dadurch eine Störung im Nahbereich abgeschwächt, die nachgelagerte Histogrammauswertung wird deshalb eher den Abstand zu einem Objekt als zu der Störung messen.

Nochmals sei der Unterschied zu der Detektionsschwelle gemäß den Figuren 3 und 4 betont: Dort erkennt die angepasste Detektionsschwelle unmittelbar Peaks 54, 56, und deshalb wird mit einer unempfindlicheren Schwelle nur noch ein Objektpeak 56 und nicht mehr ein Störpeak 54 erkannt, jedenfalls solange der Störpeak 54 nicht eine dem Objektpeak vergleichbare Stärke annimmt. Die angepasste Komparatorschwelle gemäß Figur 5 hingegen bewirkt eine Art Dämpfung im Anfangsbereich des Histogramms. Die eigentliche Bestimmung des Empfangszeitpunkts folgt erst im nächsten Schritt, wobei ein Störpeak im Nahbereich dieses Histogramms weniger ausgeprägt ist und dadurch die Identifizierung eines Objektpeaks erleichtert wird. Übrigens könnte die Histogrammauswertung durchaus nochmals mit einer Detektionsschwelle erfolgen, die diesmal auf einen Mindestcount gesetzt ist, der von einem Objekt erwartet wird, wobei diese Detektionsschwelle für sich nochmals im Nahbereich angepasst sein könnte.

Figur 6 zeigt ein Blockschaltbild zur Erläuterung der Schwellenanpassung im Nahbereich. In dieser Ausführungsform wird eine Komparatorschwelle eines Pulsmittelungsverfahrens angepasst, wie soeben unter Bezugnahme auf die Figur 5 erläutert. Alternativ könnte in analoger Weise eine Detektionsschwelle angepasst werden, wie zuvor unter Bezugnahme auf die Figuren 3 und 4 erläutert, vorzugsweise in einem Einzelpulsverfahren, in dem das Aufbauen und Auswerten eines Histogramms entfällt.

Eine Triggererzeugung 68 erzeugt einen Triggerpuls, der den Anfang einer Abstandsmessung definiert. Mit definiertem Zeitbezug zu dem Triggerpuls sendet der Lichtsender 12 einen Lichtpuls aus, der an dem Objekt 16 zurückgeworfen wird. Der Lichtempfänger 18 wandelt das einfallende Licht in ein Empfangssignal. Der Triggerpuls wird außerdem einer Anpassungspulserzeugungseinheit 70 zugeführt. Der dort ausgehende Anpassungspuls wird mit einem Schwellensignal kombiniert, beispielsweise auf ein konstantes Schwellensignal aufaddiert. Aufgrund des Anpassungspulses setzt das Schwellensignal in einer Anfangsphase der Messung, die einem Nahbereich entspricht, eine unempfindlichere Schwelle.

An einem Komparator 72 liegen dann an einem Eingang das Empfangssignal und an einem anderen Eingang das Schwellensignal an. Der Komparator 72 arbeitet vorzugsweise als Binarisierer, der den einen binären Zustand bei unterschwelligem und den anderen binären Zustand bei überschwelligem Empfangssignal einnimmt. Eine Histogrammerzeugungseinheit 74 sortiert diese binären Ereignisse in zeitliche Bins ein und baut so über wiederholte Einzelmessungen mit jeweils einem ausgesandten und wieder empfangenen Lichtpuls ein Histogramm auf. Eine Histogrammauswertung 76 lokalisiert einen Objektpeak 56 in diesem Histogramm und bestimmt dadurch den Empfangszeitpunkt. Dabei können eine steigende oder fallende Flanke oder ein über einer weiteren, nun auf das Histogramm angewandten Detektionsschwelle liegender Histogrammanteil beziehungsweise dessen Schwerpunkt ermittelt werden, oder es wird ein Funktions-, insbesondere Parabelfit in den Objektpeak 56 vorgenommen. Unter Berücksichtigung des durch den Triggerpuls definierten Sendezeitpunktes sind damit die Lichtlaufzeit und letztlich der Abstand des Objekts 16 gemessen. Die Elemente 68, 70, 72, 74 und 76 sind vorzugsweise Teil der Steuer- und Auswertungseinheit 22.

Figur 7 zeigt im oberen Teil die beiden Sendepulse 78 zweier aufeinanderfolgender Messungen. Die Sendepulse 78 können wahlweise auch als Triggerpulse aufgefasst werden, beides hängt mit einem bekannten, konstanten Zeitversatz miteinander zusammen. Die Anpassungspulserzeugungseinheit 70 erzeugt aus den Triggerpulsen zugehörige Anpassungspulse 80, die im unteren Teil der Figur 7 dargestellt sind. Durch Parametrierung beziehungsweise Dimensionierung der Schaltelemente der Anpassungspulserzeugungseinheit 70 können zeitliche Lage, hier dargestellt als Zeitversatz Δt, sowie Dauer t_{D} des Anpassungspulses vorgegeben werden. Es sind weitere Parameter der Pulscharakteristik denkbar, etwa Amplitude oder Form und Dauer der steigenden beziehungsweise fallenden Flanke. Damit wird festgelegt, in welcher Anfangsphase beziehungsweise welchem Nahbereich Störpeaks 54 unterdrückt werden sollen und bis zu welcher Ausprägung ein Peak noch als Störpeak 54 behandelt werden soll. Auch das Vorzeichen des Pulses kann je nach Ausführungsform gewählt werden. In Figur 7 ist ein negativer Anpassungspuls 80 für eine invertierte Schwelle gezeigt (active-low), der Anpassungspuls 80 ist in anderen Ausführungsformen positiv, so dass erfindungsgemäß beide Polaritäten möglich sind.

Die Anpassungspulserzeugungseinheit 70 kann auf einem digitalen Rechenbaustein beziehungsweise in integrierten Schaltkreisen implementiert sein, etwa auf einem FPGA (Field Programmable Gate Array) oder ASIC (Application-Specific Integrated Circuit). Vorzugsweise genügt jedoch eine einfache analoge Schaltung, die an einen derartigen digitalen Baustein angebunden sein kann, um beispielsweise den Triggerpuls zur Verfügung zu stellen.

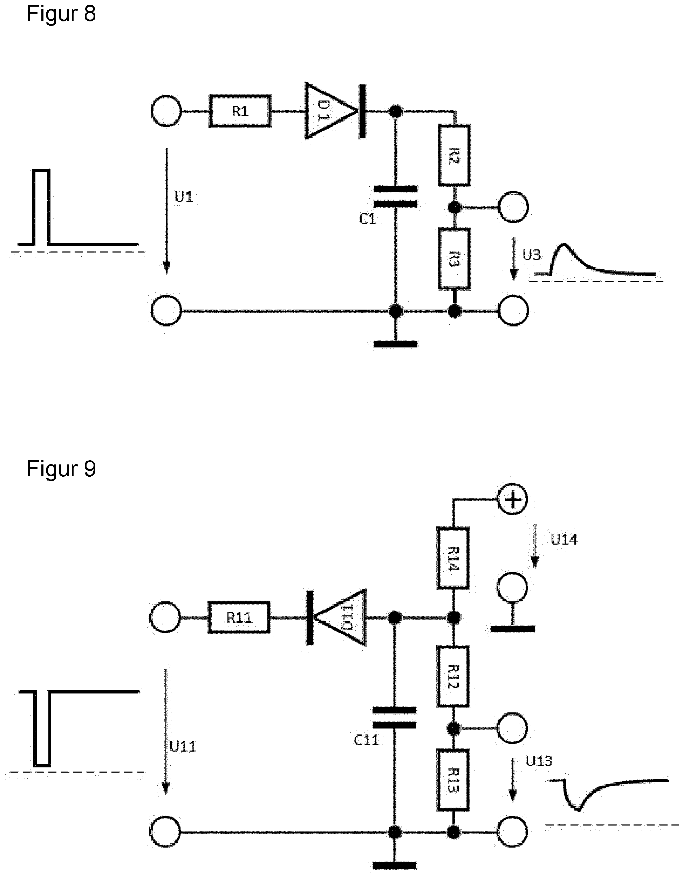

Figur 8 zeigt eine beispielhafte analoge Schaltung zum Erzeugen eines positiven Anpassungspulses (U3, rechts) aus einem Triggerpuls als kurzem positivem Eingangspuls (U1, links). Der Triggerpuls lädt einen Kondensator C1 über eine Diode D1, vorzugsweise eine Schottky-Diode, und einen Widerstand R1. Ausgangsseitig wird die Kondensatorspannung über einen Teiler aus zwei Widerständen R2 und R3 heruntergeteilt. Vorzugsweise ist die Aufladezeitkonstante C1 / (1 / (R1+Rdyn_D1) + 1 / (R2+R3)), mit RDyn_D1 dynamischer, stromabhängiger Innenwiderstand der Diode D1, deutlich kürzer als die Entladezeitkonstante C1 * (R2 + R3) gewählt. Der Ausgangspegel kann über die Pulsbreite des Triggerpulses variiert werden. Bei einem sehr kurzen Triggerpuls ist die Aufladung nur unvollständig und die Spannung an C1 entsprechend reduziert. Somit kann durch elektrische Ansteuerung, nämlich einen geeigneten Triggerpuls, und/oder die Dimensionierung der Schaltelemente ein Anpassungspuls mit gewünschter Pulscharakteristik erzeugt werden.

Figur 9 zeigt eine beispielhafte Schaltung zum Erzeugen eines negativen Anpassungspulses aus einem Triggerpuls, der nun ein negativer Puls aufgehend von einem hohen Potential in Ruhe ist (active-low). Die Schaltung entspricht weitgehend der Figur 8, den Schaltungselementen ist lediglich zur Unterscheidung von Figur 8 eine weitere "1" hinzugefügt, und ergänzt ist eine Spannungsquelle für eine Spannung U14, die für ein Ruhepotential sorgt. Deshalb ist in der Ruhelage der Kondensator C11 über einen Spannungsteiler eines weiteren Widerstands R14 mit U_C11 = U14 * (R12+R13) / (R14+R12+R13) positiv geladen. Während der Triggerpuls eingangsseitig anliegt, wird der Kondensator C11 über R11 und D11 entladen, mit einer Entladezeitkonstante C11 / (1 / (R11+Rdyn_D11) + 1 / R14 + 1 / (R12+R13)). Je schmaler der Triggerpuls, desto unvollständiger wird der Kondensator C11 entladen. Dadurch kann die Amplitude U13 des Anpassungspulses gezielt reduziert beziehungsweise variiert werden. Wenn der Triggerpuls durchgelaufen ist, wird der Kondensator C11 mit der Zeitkonstanten C11 / (1 / R14 + 1 / (R12+R13)) wieder auf das ursprüngliche U_C11 aufgeladen.

## Patentansprüche

1. Entfernungsmessender optoelektronischer Sensor (10) zur Erfassung und Abstandsmessung eines Objekts (16) in einem Überwachungsbereich (14), dereinen Lichtsender (12) zum Aussenden eines Lichtsignals, einen Lichtempfänger (18) mit mindestens einem Lichtempfangselement (20) zum Erzeugen eines Empfangssignals aus dem von dem Objekt (16) remittierten Lichtsignal, insbesondere einem Lichtempfangselement (20), das mit einer Vorspannung oberhalb einer Durchbruchspannung vorgespannt und somit in einem Geiger-Modus betrieben ist, sowie eine Steuer- und Auswerteeinheit (22) aufweist, die dafür ausgebildet ist, das Empfangssignal mit einem Schwellensignal zu vergleichen, einen Empfangszeitpunkt des remittierten Lichtsignals, daraus eine Lichtlaufzeit und damit den Abstand des Objekts (16) zu messen,
**dadurch gekennzeichnet,**
**dass** die Steuer- und Auswertungseinheit (22) weiterhin dafür ausgebildet ist, das Schwellensignal in einer Anfangsphase der Abstandsmessung um einen Sendezeitpunkt des Aussendens des Lichtsignals anzupassen, um während der Anfangsphase eine unempfindlichere Schwelle zu setzen als während der weiteren Abstandsmessung.

2. Sensor (10) nach Anspruch 1,
wobei die Steuer- und Auswertungseinheit (22) eine Digitalisierungseinheit oder Binarisierungseinheit (72) aufweist, und wobei das Schwellensignal eine Digitalisierungsschwelle oder Binarisierungsschwelle setzt.

3. Sensor (10) nach Anspruch 1 oder 2,
wobei die Steuer- und Auswertungseinheit (22) dafür ausgebildet ist, in einer Vielzahl von Einzelmessungen jeweils ein Lichtsignal auszusenden und wieder zu empfangen, aus den jeweiligen Empfangssignalen der Einzelmessungen durch den Vergleich des Empfangssignals mit dem Schwellensignal ein Histogramm aufzubauen und das Histogramm für die Bestimmung des Empfangszeitpunkts auszuwerten.

4. Sensor (10) nach einem der vorhergehenden Ansprüche,
wobei die Steuer- und Auswertungseinheit (22) dafür ausgebildet ist, ein analoges Schwellensignal zu erzeugen und analog mit dem Empfangssignal zu vergleichen.

5. Sensor (10) nach einem der vorhergehenden Ansprüche,
wobei die Steuer- und Auswertungseinheit (22) einen Komparator (72) mit einem ersten Eingang und einem zweiten Eingang aufweist, wobei das Empfangssignal an dem ersten Eingang und das Schwellensignal an dem zweiten Eingang angelegt ist.

6. Sensor (10) nach einem der vorhergehenden Ansprüche,
wobei die Steuer- und Auswertungseinheit (22) dafür ausgebildet ist, einen Anpassungspuls zu erzeugen, der das Schwellensignal in der Anfangsphase verändert.

7. Sensor (10) nach Anspruch 6,
wobei die Steuer- und Auswertungseinheit (22) dafür ausgebildet ist, den Anpassungspuls mit einer Pulscharakteristik in Beginn, Ende, Dauer, Anstiegsverhalten und/oder Abklingverhalten entsprechend einer vorgegebenen Anpassung des Schwellensignals zu erzeugen.

8. Sensor (10) nach einem der vorhergehenden Ansprüche,
wobei die Steuer- und Auswertungseinheit (22) dafür ausgebildet ist, einen Triggerpuls zu erzeugen, der in einem bekannten Zeitversatz zum Aussenden des Lichtsignals steht, insbesondere das Aussenden auslöst.

9. Sensor (10) nach Anspruch 6 oder 7 und 8,
wobei die Steuer- und Auswertungseinheit (22) dafür ausgebildet ist, in einer Anpassungspulserzeugungseinheit (70) aus dem Triggerpuls den Anpassungspuls zu erzeugen.

10. Sensor (10) nach Anspruch 9,
wobei die Anpassungspulserzeugungseinheit (70) einen Kondensator (C1, C11) aufweist, der durch den Triggerpuls aufgeladen wird und sich unter Erzeugen des Anpassungspulses entlädt.

11. Sensor (10) nach Anspruch 10,
wobei die Anpassungspulserzeugungseinheit (70) einen ersten Widerstand (R1, R11) und eine Diode (D1, D11) zum Aufladen des Kondensators (C1, C11) und/oder eine Teilerschaltung mit einem zweiten Widerstand (R2, R12) und einem dritten Widerstand (R3, R13) zum Entladen des Kondensators (C1, C11) aufweist.

12. Sensor (10) nach einem der Ansprüche 9 bis 11,
wobei die Anpassungspulserzeugungseinheit (70) dafür ausgebildet ist, einen negativ gerichteten Anpassungspuls zu erzeugen.

13. Sensor (10) nach einem der vorhergehenden Ansprüche,
wobei die Steuer- und Auswertungseinheit (22) dafür ausgebildet ist, die Anpassung des Schwellensignals in der Anfangsphase wahlweise an- oder abzuschalten.

14. Sensor (10) nach einem der vorhergehenden Ansprüche,
der als Laserscanner ausgebildet ist, insbesondere als Mehrlagenscanner, und der eine bewegliche Ablenkeinheit (24) aufweist, mit deren Hilfe die Lichtsignale periodisch durch den Überwachungsbereich (14) geführt werden.

15. Verfahren zur optischen Erfassung und Abstandsmessung eines Objekts (16) in einem Überwachungsbereich (14), wobei ein Lichtsender (12) ein Lichtsignal aussendet, ein Lichtempfänger (18), der mindestens ein Lichtempfangselement (20) aufweist, das insbesondere mit einer Vorspannung oberhalb einer Durchbruchspannung vorgespannt und somit in einem Geiger-Modus betrieben wird, aus dem von dem Objekt (16) remittiertem Lichtsignal ein Empfangssignal erzeugt, das Empfangssignal mit einem Schwellensignal verglichen wird, ein Empfangszeitpunkt des remittierten Lichtsignals, daraus eine Lichtlaufzeit und damit der Abstand des Objekts (16) gemessen wird,
**dadurch gekennzeichnet,**
**dass** das Schwellensignal in einer Anfangsphase der Abstandsmessung um einen Sendezeitpunkt des Aussendens des Lichtsignals angepasst wird, um während der Anfangsphase eine unempfindlichere Schwelle zu setzen als während der weiteren Abstandsmessung.
